# FASCICULE DE BREVET EUROPEEN

(11) **EP 2 732 173 B1**
(45) Date de publication et mention de la délivrance du brevet: **09.09.2015**
(21) Numéro de dépôt: 12744031.1
(22) Date de dépôt: 02.07.2012
(51) Int. Cl.: F16C 29/04, F16C 29/12

(54) **DISPOSITIF DE GUIDAGE EN TRANSLATION D'UNE CHARGE ET PROCÉDÉ DE RÉALISATION D'UN TEL DISPOSITIF**
VORRICHTUNG ZUR ÜBERGANGSFÜHRUNG EINER LAST UND VERFAHREN ZUR HERSTELLUNG EINER SOLCHEN VORRICHTUNG
DEVICE FOR THE TRANSLATIONAL GUIDANCE OF A LOAD AND METHOD OF CREATING SUCH A DEVICE

(30) Priorité: 12.07.2011 FR 1156341
(43) Date de publication de la demande: 21.05.2014
(73) Titulaire: Micro-Controle - Spectra Physics, 91000 Evry (FR)
(72) Inventeur: THOMAS, Patrick, F-45450 Fay aux Loges (FR); MANEUF, Serge, F-45200 Amilly (FR); BOITIAUX, Pascal, F-45490 Migneres (FR)
(74) Mandataire: Gevers France
(86) Numéro de dépôt international: PCT/FR2012/051521
(87) Numéro de publication internationale: WO 2013/007914

(56) Documents cités:
- DE-A1- 4 323 670
- US-A- 5 201 584

## Description

La présente invention concerne un dispositif de guidage de précision, en translation, d'une charge, et un procédé de réalisation d'un tel dispositif.

La présente invention s'applique, plus précisément, à un dispositif de guidage en translation (comme décrit dans le document US-5 201 584 par exemple) du type comportant :
- une platine allongée qui présente un fond horizontal pourvu à ses deux extrémités de branches verticales ;
- un chariot qui sert de support de charge et dont au moins une partie est agencée sous contrainte latérale entre les branches de ladite platine ; et
- des moyens de guidage qui sont agencés au niveau de la jonction entre ladite platine et ledit chariot et qui permettent audit chariot de se déplacer longitudinalement par rapport à ladite platine.

Bien que non exclusivement, la présente invention est destinée plus particulièrement au guidage en translation d'éléments optiques et/ou lasers, et notamment des moyens d'acquisition de données, en particulier des moyens de mesure. Ce dispositif de guidage est utilisé de préférence pour une acquisition de données, pour laquelle une rectitude de mouvement très exigeante est requise, par exemple dans le domaine médical ou dans le domaine militaire.

De façon usuelle, pour réaliser un tel dispositif de guidage, et notamment pour monter une partie de type « mâle » dudit chariot sur ladite platine de type « femelle », on met en oeuvre, généralement, les opérations suivantes :
- on réalise une déformation latérale du corps de la platine, en écartant ses branches ; puis
- on place ladite partie « mâle » du chariot entre ces branches, que l'on relâche après le positionnement de cette dernière, la contrainte latérale étant créée suite à ce relâchement en raison de dimensions latérales respectives appropriées de ladite partie « mâle » et de ladite platine. On réalise également un réglage manuel par vis de la pression de guidage.

Cette réalisation et notamment ce montage, usuels, d'un dispositif de guidage présente des inconvénients, et en particulier :
- un effet négatif (dû à la déformation du corps de la platine) sur la rectitude du guidage, qui ne présente pas les propriétés suffisantes exigées pour toutes les applications précitées ; et
- une pré-charge du guidage (appliquée par l'effort résultant de l'extension latérale de la partie femelle) qui est mal maîtrisée.

Ce dispositif de guidage usuel n'est donc pas complètement satisfaisant pour toutes les applications susceptibles d'être envisagées, notamment dans le domaine médical ou dans le domaine militaire.

La présente invention a pour objet de remédier à ces inconvénients. Elle concerne un dispositif de guidage de précision en translation d'une charge, à performance accrue et permettant d'assurer une précontrainte du guidage, de façon déterministe, et sans perte de qualité de sa géométrie.

A cet effet, selon l'invention, ledit dispositif du type comportant :
- une platine allongée qui présente un fond horizontal (pourvu de préférence à ses deux extrémités de branches verticales) ;
- un chariot qui sert de support de charge et dont au moins une partie est agencée sous contrainte latérale sur ladite platine ; et
- des moyens de guidage qui sont agencés au niveau de la jonction entre ladite platine et ledit chariot et qui permettent audit chariot de se déplacer longitudinalement par rapport à ladite platine,
   est remarquable en ce que ledit chariot comprend :
- une plaque inférieure qui est pourvue de découpes traversantes destinées à lui conférer au moins une élasticité latérale et qui est montée sous contrainte latérale sur ladite platine ; et
- un plateau qui est fixé au niveau de points de fixation sur la face supérieure de ladite plaque inférieure.

Ainsi, grâce à l'invention, et comme précisé ci-dessous, le montage de la plaque inférieure est réalisé en tenant compte de l'élasticité latérale générée par lesdites découpes traversantes, ce qui évite de déformer le corps de la platine lors du montage comme cela est le cas pour les dispositifs usuels précités.

De plus, selon l'invention, on forme lesdites découpes de manière à générer une élasticité latérale présentant des caractéristiques prédéterminées, telles que requises pour l'application envisagée. Les caractéristiques (nombre, forme, épaisseur,...) desdites découpes sont définies de façon empirique.

Par conséquent, la présente invention présente notamment les avantages suivants :
- une absence de déformation du corps de la platine lors du montage de sorte que la rectitude du guidage est préservée ; et
- une pré-charge définie par la compression contrôlée de la partie déformable (plaque inférieure) du chariot, qui est bien maîtrisée.

Dans un mode de réalisation préféré, le fond horizontal de la platine est pourvu à ses deux extrémités de branches verticales, et la plaque inférieure est montée sous contrainte latérale entre lesdites branches verticales de la platine, de préférence de type monobloc. Toutefois, les branches peuvent également être rapportées sur le fond horizontal, ou des éléments (tels que des rails de guidage) des moyens de guidage peuvent être montés directement sur le fond horizontal.

Avantageusement, ladite plaque inférieure comprend également des perçages aux extrémités d'au moins certaines desdites découpes, ce qui permet de faciliter le travail desdites découpes.

En outre, de façon avantageuse, pour éviter un blocage complet de la plaque inférieure lors de la fixation du plateau :
- ladite plaque inférieure peut comprendre des découpes auxiliaires traversantes au niveau d'au moins certains des points de fixation, de manière à générer une certaine souplesse ; et/ou
- des vis (qui sont utilisées pour la fixation) peuvent être entourées d'un élément en matériau élastique.

Dans un mode de réalisation préféré, les faces extérieures respectivement des branches verticales de ladite platine, du fond horizontal de ladite platine, et de ladite plaque inférieure présentent, en section transversale, une forme générale rectangulaire qui, grâce aux caractéristiques précitées, n'est pas déformée lors du montage.

La présente invention concerne également un procédé de réalisation d'un dispositif de guidage en translation, du type précité.

Selon l'invention, ce procédé est remarquable en ce que l'on met en oeuvre au moins les opérations successives suivantes :
a) on réalise des découpes traversantes dans une plaque dite inférieure afin de lui conférer au moins une élasticité latérale présentant des
   caractéristiques prédéterminées ;
b) on monte cette plaque inférieure sur la platine en mettant en oeuvre une compression rendue possible par ladite élasticité latérale afin d'obtenir un agencement sous contrainte latérale, lesdits moyens de guidage étant prévus entre ladite plaque inférieure et ladite platine ; et
c) on fixe un plateau sur la face supérieure de ladite plaque inférieure, ledit plateau et ladite plaque inférieure formant ledit chariot mobile du dispositif de guidage.

La pré-charge du guidage est donc appliquée par l'effort résultant d'une compression de la partie mâle (plaque inférieure) déformable.

En outre, avantageusement, à l'étape a), on peut également pratiquer dans ladite plaque inférieure des découpes auxiliaires traversantes, au niveau de points de fixation (du plateau sur ladite plaque inférieure).

La présente invention concerne également tout système d'acquisition de données, qui comprend un dispositif de guidage en translation, tel que décrit ci-dessus.
Les figures du dessin annexé feront bien comprendre comment l'invention peut être réalisée. Sur ces figures, des références identiques désignent des éléments semblables.
La figure 1 montre, dans une vue schématique en perspective, les éléments essentiels d'un dispositif de guidage conforme à l'invention.
La figure 2 montre, dans une vue schématique en perspective, un exemple de réalisation d'une plaque inférieure d'un chariot faisant partie d'un dispositif de guidage conforme à l'invention.
La figure 3 est une vue en perspective d'un exemple de réalisation d'un dispositif de guidage conforme à l'invention.

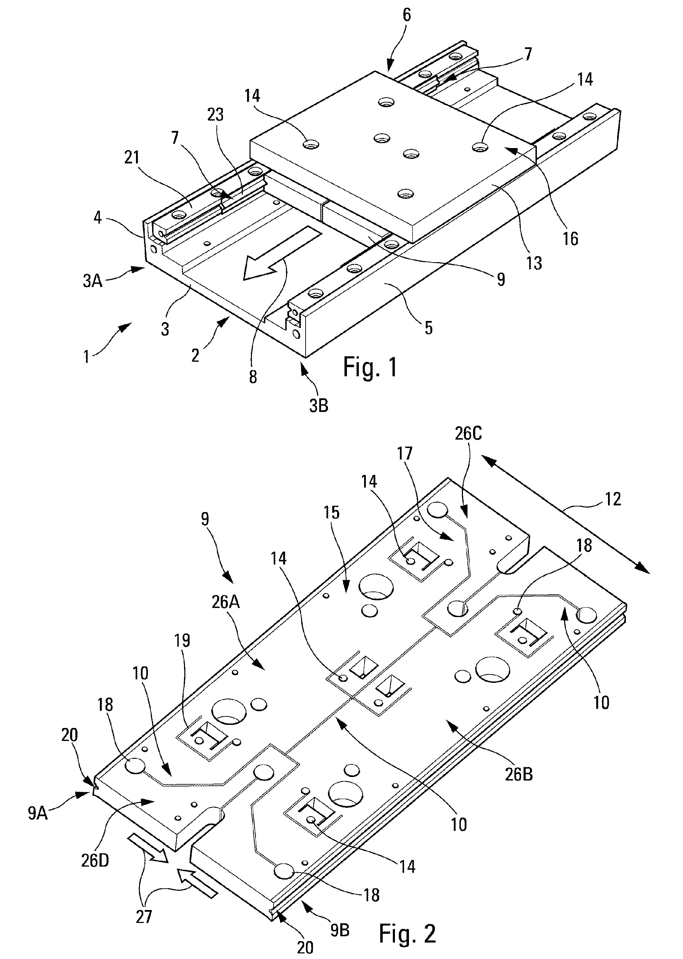

Le dispositif 1 conforme à l'invention et représenté schématiquement sur la figure 1 est destiné au guidage de précision en translation d'une charge, notamment d'un moyen d'acquisition de données, en particulier de type optique. Ce dispositif 1 peut notamment être utilisé dans le domaine de l'imagerie, en particulier médicale, ou dans le domaine militaire, et plus généralement dans tout domaine où une rectitude de mouvement (en translation) très élevée est exigée.

Ce dispositif 1 de guidage de précision est du type comportant :
- une platine 2 allongée, de préférence en acier trempé, qui présente en section transversale de forme générale en U à angles droits. Cette platine 2 allongée comprend un fond horizontal 3 allongé, de forme générale plane, pourvu à ses deux extrémités latérales 3A et 3B de branches verticales 4 et 5. Cette platine 2 peut être posée et fixée sur un support approprié ;
- un chariot mobile 6, qui sert de support pour une charge (non représentée), en particulier un moyen d'acquisition de données, une partie au moins dudit chariot 6 étant agencée sous contrainte latérale entre les branches 4 et 5 de ladite platine 2 ; et
- des moyens de guidage 7 usuels, précisés ci-dessous, qui sont agencés au niveau de la jonction entre ladite platine 2 et ledit chariot 6 et qui permettent audit chariot 6 de se déplacer longitudinalement par rapport à ladite platine 2, comme illustré par une flèche 8 sur la figure 1, dans le sens de cette flèche 8 et dans le sens opposé.

Ces moyens de guidage 7 font partie d'un système de guidage (non représenté) qui comprend tous les éléments usuels nécessaires pour engendrer le déplacement du chariot 6, et notamment des moyens moteurs.

Selon l'invention, ledit chariot 6 comprend :
- une plaque inférieure 9, de forme plane, qui est pourvue de découpes 10 traversantes (c'est-à-dire des découpes qui entaillent la plaque inférieure 9 dans toute son épaisseur) destinées à lui conférer au moins une élasticité latérale, c'est-à-dire une élasticité dans la direction perpendiculaire à la direction longitudinale 7 dans le plan horizontal, comme illustré par une double flèche 12 sur la figure 2. Cette plaque inférieure 9, de préférence en acier trempé, présente des dimensions appropriées pour être montée sous contrainte latérale entre les branches 4 et 5 de ladite platine 2, comme précisé ci-dessous ; et
- une plateau 13, également de forme plane, qui est fixé, au niveau de points (ou zones) de fixation 14, par sa face inférieure, sur la face supérieure 15 de ladite plaque inférieure 9. Ce plateau 13, réalisé de préférence également en acier trempé, est destiné à porter sur sa face supérieure 16, directement ou par l'intermédiaire d'un support usuel quelconque, la charge devant être déplacée.

De plus, selon l'invention, lesdites découpes 10 sont formées de manière à générer une élasticité latérale présentant des caractéristiques prédéterminées, telles que requises pour l'application envisagée, en tenant compte des dimensions respectives de largeur de la plaque inférieure 9 et d'écartement des branches 4 et 5. Les caractéristiques (nombre, épaisseur,...) desdites découpes 10, et notamment leur design 17 (représentation en plan) sont définis, de préférence, de façon empirique. Pour ce faire, on détermine de façon théorique un design initial, que l'on modifie et ajuste pour obtenir un design final présentant les caractéristiques, notamment d'élasticité latérales, recherchées. A titre d'illustration, on a représenté sur la figure 2, un exemple de design 17 (c'est-à-dire de représentation en plan) de l'ensemble des découpes 10, qui sera précisé ci-dessous.

Par conséquent, le dispositif 1 conforme à l'invention présente notamment les avantages suivants :
- une absence de déformation du corps de la platine 2 lors du montage de sorte que la rectitude du guidage du chariot 6 est préservée. On peut ainsi obtenir, à titre d'illustration, une rectitude du guidage d'environ 0,5 *µ*m sur 300 mm ; et
- une pré-charge définie par la compression contrôlée de la partie déformable (plaque inférieure 9 du chariot 6) qui est bien maîtrisée.

Ladite plaque inférieure 9 comprend également, comme représenté sur la figure 2, des perçages 18 aux extrémités d'au moins certaines découpes 10, 19, qui permettent de faciliter l'action générée par lesdites découpes 10, 19. Le plateau 13 est fixé sur ladite plaque inférieure 9, de préférence, au moyen de vis (non représentées).

En outre :
- au moins certaines desdites vis peuvent être entourées d'un élément, par exemple tubulaire, qui est réalisé dans un matériau élastique ; et/ou
- la plaque inférieure 9 peut également comprendre des découpes auxiliaires 19 traversantes, entourant partiellement au moins certains desdits points de fixation 14, dans le but de générer une certaine souplesse au niveau de ces points.

Ces dernières caractéristiques permettent d'éviter un blocage complet de la plaque inférieure 9, lors de la fixation du plateau 13 sur cette dernière.

Dans un mode de réalisation préféré, les faces extérieures respectivement des branches verticales 4 et 5 de ladite platine 2, du fond horizontal 3 de ladite platine 2, et de ladite plaque inférieure 9 présentent, en section transversale, une forme rectangulaire qui, grâce aux caractéristiques précitées, n'est pas déformée lors du montage.

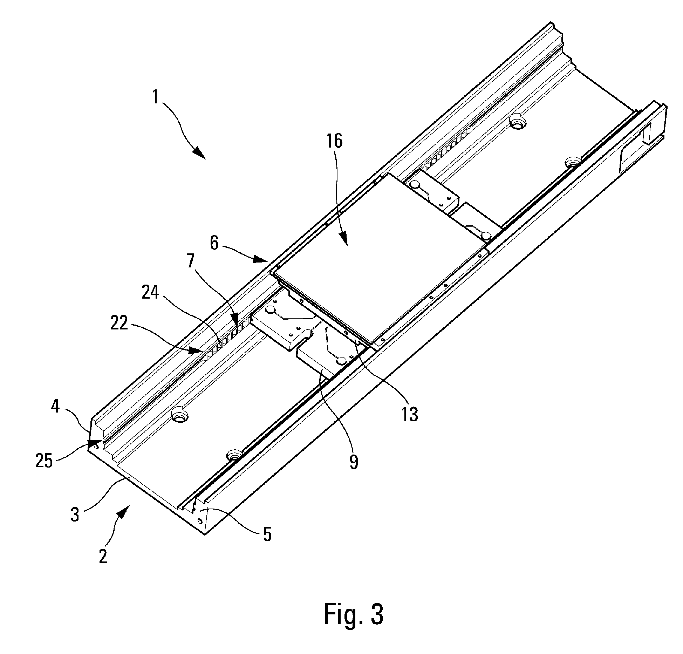

Par ailleurs, pour permettre le déplacement du chariot 6 par rapport à la platine 2, les moyens de guidage 7 comprennent des évidements 20 en forme de V qui sont pratiqués de part et d'autre de la plaque inférieure 9, sur ses côtés latéraux externes 9A et 9B, et qui coopèrent respectivement avec des moyens appropriés 21 et 22 prévus sur les branches 4 et 5 de la platine 3. Dans l'exemple de la figure 1, ces moyens coopérants 21, rapportés ou usinés, comprennent de chaque côté une baguette de guidage 23, de forme appropriée. En outre, dans l'exemple de la figure 3, ces moyens coopérants 22 comprennent, de chaque côté, des cages de rouleaux 24 qui sont agencées dans des logements appropriés (formés desdits évidements 20 en forme de V et d'évidements 25 en forme de V pratiqués dans les branches 4 et 5 de la platine 2).

En outre, dans l'exemple de la figure 2, fourni à titre d'illustration, les découpes 10 permettent de créer quatre parties 26A, 26B, 26C et 26D, à savoir deux parties 26A et 26B, latéralement externes qui sont susceptibles d'être fixées chacune par trois points de fixation 14 au plateau 13 de manière à devenir rigides et qui sont liées longitudinalement, à l'avant et à l'arrière, à deux parties flexibles 26C et 26D. On peut ainsi obtenir une raideur en compression de 1,5 N/*µ*m. On peut également obtenir une pré-charge de 300 N, appliquée par compression de 0,2 mm (différence de largeur entre la platine 2 et la plaque inférieure 9), comme illustré par des flèches 27.

On notera que les branches verticales 4 et 5 peuvent également être rapportées sur le fond horizontal 3. Il est en outre envisageable de monter des éléments des moyens de guidage 7 directement sur le fond horizontal 3 qui peut alors ne pas être pourvu de branches verticales.

La présente invention concerne également un procédé de réalisation d'un dispositif 1 de guidage en translation tel que décrit ci-dessus.

Selon l'invention, pour réaliser un tel dispositif de guidage 1, on met en oeuvre les opérations successives suivantes :
- on fabrique, de façon usuelle, de préférence en acier trempé, ladite platine 2, ladite plaque inférieure 9, et ledit plateau 13, chacun de ces éléments 2, 9 et 13 étant monobloc ;
- on pratique, de façon usuelle, de préférence au fil, des découpes traversantes 10 dans ladite plaque inférieure 9, conformément à un design et à des caractéristiques déterminés antérieurement, afin de conférer à ladite plaque inférieure 9 au moins une élasticité latérale. On peut également pratiquer dans cette plaque inférieure 9 toutes les découpes auxiliaires traversantes 19 envisagées, notamment au niveau des points de fixation 14, ainsi que tous les perçages 18 envisagés ;

- on monte cette plaque inférieure 9 entre les branches 4 et 5 de ladite platine 2 en mettant en oeuvre une compression rendue possible par l'élasticité latérale générée par les découpes 10 de manière à obtenir un agencement sous contrainte latérale. Un tel montage permet d'éviter de déformer le corps de la platine 2. De plus, lesdits moyens de guidage 7 sont agencés entre ladite plaque inférieure 9 et ladite platine 2 ; et
- on fixe ledit plateau 13 sur la face supérieure 15 de ladite plaque inférieure 9, de préférence au moyen de vis, ledit plateau 13 et ladite plaque inférieure 9 formant alors ledit chariot 6 du dispositif de guidage 1.

## Revendications

1. Dispositif de guidage en translation d'une charge, ledit dispositif (1) comportant :
- une platine (2) allongée qui présente un fond horizontal (3) ;
- un chariot mobile (6) qui sert de support de charge et dont au moins une partie est agencée sous contrainte latérale sur ladite platine (2) ; et
- des moyens de guidage (7) qui sont agencés au niveau de la jonction entre ladite platine (2) et ledit chariot (6) et qui permettent audit chariot (6) de se déplacer longitudinalement par rapport à ladite platine (2), **caractérisé en ce que** ledit chariot (6) comprend :
- une plaque inférieure (9) qui est pourvue de découpes traversantes (10) destinées à lui conférer au moins une élasticité latérale et qui est montée sous contrainte latérale sur ladite platine (2) ; et
- un plateau (13) qui est fixé au niveau de points de fixation (14) sur la face supérieure (15) de ladite plaque inférieure (9).

2. Dispositif selon la revendication 1,
**caractérisé en ce que** ladite plaque inférieure (9) comprend des découpes auxiliaires traversantes (19) au niveau d'au moins certains desdits points de fixation (14).

3. Dispositif selon l'une des revendications 1 et 2,
**caractérisé en ce que** ladite plaque inférieure (9) comprend des perçages (18) à des extrémités de découpes (10, 19).

4. Dispositif selon l'une quelconque des revendications 1 à 3,
**caractérisé en ce que** l'ensemble desdites découpes (10) sont formées de manière à générer une élasticité latérale présentant des caractéristiques prédéterminées.

5. Dispositif selon l'une quelconque des revendications 1 à 4,
**caractérisé en ce que** ledit plateau (13) est fixé sur ladite plaque inférieure (9) au moyen de vis.

6. Dispositif selon la revendication 5,
**caractérisé en ce qu'**au moins certaines desdites vis sont entourées d'un élément en matériau élastique.

7. Dispositif selon l'une quelconque des revendications précédentes,
**caractérisé en ce que** le fond horizontal (3) de ladite platine (2) est pourvu à ses deux extrémités (3A, 3B) de branches verticales (4, 5), et **en ce que** ladite plaque inférieure (9) est montée sous contrainte latérale entre lesdites branches verticales (4, 5) de la platine (2).

8. Dispositif selon la revendication 7,
**caractérisé en ce que** les faces extérieures respectivement des branches verticales (4, 5) de ladite platine (2), du fond horizontal (3) de ladite platine (2), et de ladite plaque inférieure (9) présentent, en section transversale, une forme rectangulaire.

9. Procédé de réalisation d'un dispositif de guidage en translation d'une charge, du type comportant :
- une platine (2) allongée qui présente un fond horizontal (3) ;
- un chariot mobile (6) qui sert de support de charge et dont au moins une partie est agencée sous contrainte latérale sur ladite platine (2) ; et
- des moyens de guidage (7) qui sont agencés au niveau de la jonction entre ladite platine (2) et ledit chariot (6) et qui permettent audit chariot (6) de se déplacer longitudinalement par rapport à ladite platine (2), **caractérisé en ce que** l'on met en oeuvre au moins les opérations successives suivantes :
a) on réalise des découpes traversantes (10) dans une plaque (9) dite inférieure afin de lui conférer au moins une élasticité latérale ;
b) on monte cette plaque inférieure (9) sur ladite platine (2) en mettant en oeuvre une compression rendue possible par ladite élasticité latérale de manière afin d'obtenir un agencement sous contrainte latérale, lesdits moyens de guidage (7) étant prévus entre ladite plaque inférieure (9) et ladite platine (2) ; et
c) on fixe un plateau (13) sur la face supérieure (15) de ladite plaque inférieure (9) de sorte que ledit plateau (13) et ladite plaque inférieure (9) forment ledit chariot (2).

10. Procédé selon la revendication 9,
**caractérisé en ce qu'**à l'étape a), on réalise, de plus, dans ladite plaque inférieure (9), des découpes auxiliaires traversantes (19) au niveau de points de fixation (14).

## Patentansprüche

1. Vorrichtung zur Translationsführung von einer Last, wobei die Vorrichtung (1) umfasst:
- eine längliche Auflageplatte (2), die einen horizontale Boden (3) aufweist;
- einen beweglichen Schlitten (6), der als Lastträger dient und dessen wenigstens eine Teil als seitliche Beschränkung auf der Auflageplatte (2) angeordnet ist; und
- Führungsmittel (7), die an der Verbindung zwischen der Auflageplatte (2) und dem Schlitten (6) angeordnet sind, und die es dem Schlitten (6) ermöglichen, sich in Längsrichtung relativ zu der Auflageplatte (2) zu bewegen,
**dadurch gekennzeichnet, dass** der Schlitten (6) umfaßt:
- eine untere Platte (9), die mit durchgängigen Schnitten (10), die dazu dienen, ihr mindestens eine seitliche Elastizität zu verleihen, versehen ist und als seitliche Beschränkung unter der Auflageplatte (2) angebracht ist; und
- ein Plateau (13), das an Befestigungspunkten (14) auf der oberen Fläche (15) der unteren Platte (9) befestigt ist.

2. Vorrichtung nach Anspruch 1, **dadurch gekennzeichnet, dass** die untere Platte (9) zusätzliche, durchgängige Schnitte (19) an zumindest einigen der Befestigungspunkten (14) aufweist.

3. Vorrichtung nach einem der Ansprüche 1 und 2, **dadurch gekennzeichnet, dass** die untere Platte (9) Bohrungen (18) an den Enden der Schnitte (10,19) umfasst.

4. Vorrichtung nach einem der Ansprüche 1 bis 3, **dadurch gekennzeichnet, dass** alle der genannten Schnitte (10) ausgebildet sind, um eine seitliche Elastizität mit vorgegebenen Eigenschaften zu erzeugen.

5. Vorrichtung nach einem der Ansprüche 1 bis 4, **dadurch gekennzeichnet, dass** das Plateau (13) auf der unteren Platte (9) mit Hilfe von Schrauben befestigt ist.

6. Vorrichtung nach Anspruch 5, **dadurch gekennzeichnet, dass** zumindest einige der Schrauben durch ein Element aus elastischem Material umgeben sind.

7. Vorrichtung nach einem der vorhergehenden Ansprüche, **dadurch gekennzeichnet, dass** der horizontale Boden (3) der Auflageplatte (2) an seinen beiden Enden (3A, 3B) mit vertikalen Zacken (4, 5) versehen ist, und dass die untere Platte (9) seitlich von den vertikalen Zacken (4, 5) der Auflageplatte (2) begrenzt angebracht ist.

8. Vorrichtung nach Anspruch 7, **dadurch gekennzeichnet, dass** die Außenflächen von den vertikalen Zacken (4, 5) der Auflageplatte (2), des horizontalen Bodens (3) der Auflageplatte (2) und die untere Platte (9) im Querschnitt jeweils eine rechteckige Form aufweisen.

9. Verfahren zur Herstellung einer Vorrichtung zur Translationsführung von einer Last des Typs mit:
- einer länglichen Auflageplatte (2), die einen horizontale Boden (3) aufweist;
- einem beweglichen Schlitten (6), der als Lastträger dient und dessen wenigstens eine Teil als seitliche Beschränkung auf der Auflageplatte angeordnet ist (2); und
- Führungsmitteln (7), die an der Verbindung zwischen der Auflageplatte (2) und dem Schlitten (6) angeordnet sind, und die es dem Schlitten (6) ermöglichen, sich in Längsrichtung relativ zu der Auflageplatte (2) zu bewegen,
**dadurch gekennzeichnet, dass** wenigstens die folgenden, aufeinanderfolgenden Schritte ausgeführt werden:
a) Erzeugen von durchgängigen Schnitten (10) in einer unteren Platte (9), um ihr zumindest eine seitliche Elastizität zu verleihen;
b) Anbringen der unteren Platte (9) auf der Auflageplatte (2) durch die Umsetzung einer Kompression, die durch die seitliche Elastizität ermöglicht wird, um so eine seitlich beschränkte Anordnung zu erhalten, wobei die Führungsmittel (7) zwischen der unteren Platte (9) und der Auflageplatte (2) vorgesehen sind; und
c) Befestigen eines Plateaus (13) auf der oberen Fläche (15) der unteren Platte (9), so dass das Plateau (13) und die untere Platte (9) den Schlitten (2) bilden.

10. Verfahren nach Anspruch 9, **dadurch gekennzeichnet, dass** im Schritt a) außerdem in die untere Platte (9) zusätzliche, durchgängige Schnitte (19) an den Befestigungspunkten (14) gebildet werden.

## Claims

1. Device for translational guidance of a load, said device (1) comprising:
- an elongate bed plate (2) with a horizontal base (3);
- a movable carriage (6) that serves as a load support and of which at least a portion is disposed under lateral stress on said bed plate (2); and
- a guidance means (7) that are disposed at the junction between said bed plate (2) and said carriage (6) and which enables said carriage (6) to move longitudinally relative to said bed plate (2),
**characterised in that** said carriage (6) comprises:
- a bottom plate (9) that is provided with through-cuts (10) intended to give it at least some lateral elasticity and which is fitted under lateral stress onto said bed plate (2); and
- a platform (13) that is fixed to the upper face (15) of said bottom plate (9) at fixing points (14).

2. Device according to claim 1, **characterised in that** said bottom plate (9) comprises auxiliary through-cuts (19) at at least some of said fixing points (14).

3. Device according to either claim 1 or claim 2, **characterised in that** said bottom plate (9) comprises holes (18) at extremities of cuts (10, 19).

4. Device according to any one of claims 1 to 3, **characterised in that** the set of said cuts (10) is formed in such a way as to produce some lateral elasticity with predetermined features.

5. Device according to any one of claims 1 to 4, **characterised in that** said platform (13) is fixed to said bottom plate (9) via screws.

6. Device according to claim 5, **characterised in that** at least some of said screws are surrounded by an element made of a resilient material.

7. Device according to any one of the preceding claims, **characterised in that** the horizontal base (3) of said bed plate (2) is provided at its two extremities (3A, 3B) with vertical branches (4, 5), and **in that** said bottom plate (9) is fitted under lateral stress between said vertical branches (4, 5) of the bed plate (2).

8. Device according to claim 7, **characterised in that** the outer faces of, respectively, the vertical branches (4, 5) of said bed plate (2), the horizontal base (3) of said bed plate (2), and said bottom plate (9) have, in transverse section, a rectangular shape.

9. Method for producing a device for translational guidance of a load, of the type comprising:
- an elongate bed plate (2) with a horizontal base (3);
- a movable carriage (6) that serves as a load support and of which at least a portion is disposed under lateral stress on said bed plate (2); and
- a guidance means (7) that are disposed at the junction between said bed plate (2) and said carriage (6) and which enables said carriage (6) to move longitudinally relative to said bed plate (2),
**characterised in that** at least the following successive operations are implemented:
a) through-cuts (10) are made in a plate (9) described as a bottom plate in order to give it at least some lateral elasticity;
b) this bottom plate (9) is fitted to said bed plate (2) using compression made possible by said lateral elasticity in order to obtain an arrangement under lateral stress, said guidance means (7) being provided between said bottom plate (9) and said bed plate (2); and
c) a platform (13) is fixed to the upper face (15) of said bottom plate (9), so that said platform (13) and said bottom plate (9) form said carriage (6).

10. Method according to claim 9, **characterised in that** at step a) auxiliary through-cuts (19) are additionally made in said bottom plate (9), at fixing points (14).
